# EUROPEAN PATENT APPLICATION

(11) **EP 2 717 464 A1**
(43) Date of publication of application: **09.04.2014**
(21) Application number: 12793527.8
(22) Date of filing: 05.04.2012
(51) Int. Cl.: H02P 3/22, B64G 1/00, H02P 27/06

(54) **ELECTRIC ACTUATOR DRIVE DEVICE AND ACTUATOR USING SAME**

(30) Priority: 03.06.2011 JP 2011124735
(71) Applicant: IHI Aerospace Co., Ltd., Koto-Ku Tokyo 135-0061 (JP); Sinfonia Technology Co., Ltd., Tokyo 105-8564 (JP)
(72) Inventor: OYORI, Hitoshi, Tokyo 135-0061 (JP); WAKITA, Masaya, Tokyo 105-8564 (JP); SHIMOMURA, Yukio, Tokyo 105-8564 (JP)
(74) Representative: Wasner, Marita
(86) International application number: PCT/JP2012/059335
(87) International publication number: WO 2012/165042

(57) **Abstract**

To bring an actuator driving motor having a malfunction such as failure to a stop in a shorter time without employing a mechanical braking system. The present invention is an electric actuator driver, including: a power supply; an actuator driving motor (11A, 11B) to be supplied with power from the power supply to drive an actuator (B1); a motor braking circuit (C) to apply a regenerative brake on the actuator driving motor (11A, 11B); a malfunction occurrence determining means (D1) to determine whether there is a malfunction in a necessary component; and a regenerative braking means (D3) to apply the regenerative brake on the actuator driving motor (11A, 11B) by means of the motor braking circuit (C).

## Description

### Technical Field

The present invention relates to an electric actuator driver that is installed and used in spacecrafts such as rockets and satellites or jet planes, and also relates to an actuator using the same.

### Background Art

One of this kind of electric actuator is disclosed in Patent Literature 1 under the name of electric actuator. Fig. 7 is a view illustrating the configuration of this electric actuator disclosed in Patent Literature 1.

The conventional electric actuator disclosed in Patent Literature 1 includes a first motor 1 and a second motor 2, wherein on the first motor 1 (or on the second motor 2), a lead 4 of a ball screw 3 is provided coaxially with a motor rotating axis 1a (or a motor rotating axis 2a), and on the second motor 2 (or on the first motor 1), a nut 5 of the ball screw 3 is provided coaxially with the motor rotating axis 2a (or the motor rotating axis 1a), so that the first motor 1 and the second motor 2 are coupled to each other via the ball screw 3.

In the figure, the actuator is further provided with housings 6 and 7, a nut brake 8, and a lead brake 9 and is mounted on a spacecraft R.

### Citation List

### Patent Literature

Patent Literature 1: JP 2003-42258A

### Summary of Invention

### Technical Problem

However, because the electric actuator disclosed in Patent Literature 1 employs a brake system for stopping the rotation of a faulty component, it suffers from the problem of taking some time before the brake works effectively.

It is an object of the present invention to provide an electric actuator driver that can bring an actuator driving motor having a malfunction such as failure to a stop in a shorter time without employing a mechanical brake system, and to provide an actuator using the same.

### Solution to Problem

An electric actuator driver aimed at solving the above-described problem, comprises: a power supply; an actuator driving motor to be supplied with power from the power supply to drive an actuator; and a motor braking circuit to apply a regenerative brake on the actuator driving motor; wherein the electric actuator driver further comprises: a malfunction occurrence determining means to determine whether there is a malfunction in a necessary component; and a regenerative braking means to apply the regenerative brake on the actuator driving motor by means of the motor braking circuit.

In this configuration, if it is determined that there is a malfunction in a necessary component, the motor braking circuit applies the regeneration brake on the actuator driving motor.

The actuator aimed at solving the above-described problem employs the above electric actuator driver.

### Advantageous Effects of Invention

With the present invention, a malfunctioning actuator driving motor can be brought to a stop in a shorter time without employing a mechanical brake system. Furthermore, the driver can be reduced in size and weight.

### Brief Description of Drawings

Fig. 1 is a block diagram illustrating the schematic configuration of an actuator that employs electric actuator drivers according to an embodiment of the present invention.
Fig. 2 is a block diagram illustrating the circuit configuration of the electric actuator drivers.
Fig. 3 is a partial explanatory view illustrating a configuration where the actuator with the electric actuator drivers is provided for deflecting a nozzle of a rocket motor installed in a spacecraft.
Fig. 4 is a flowchart illustrating a regenerative braking operation of the electric actuator driver.
Fig. 5 is a perspective view illustrating a configuration where the actuator with the electric actuator drivers is used for moving a movable vane of a jet engine.
Fig. 6 is a block diagram illustrating the schematic configuration of another actuator that employs the electric actuator driver according to the embodiment of the present invention.

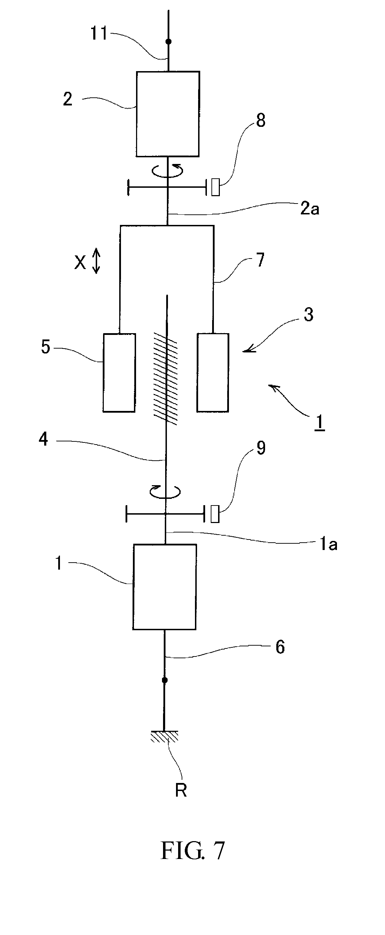

Fig. 7 is a view illustrating the configuration of the electric actuator described in Patent Literature 1.

### Description of Embodiments

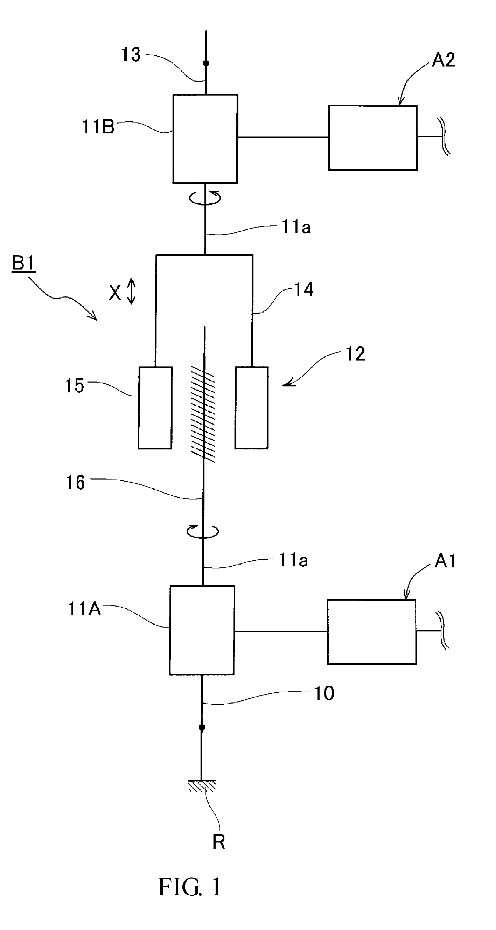

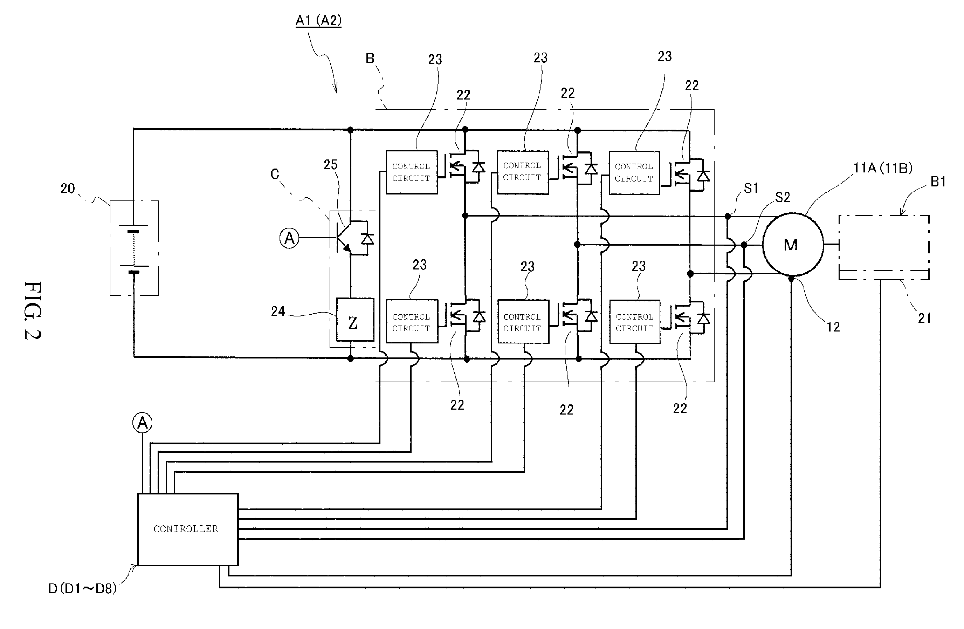

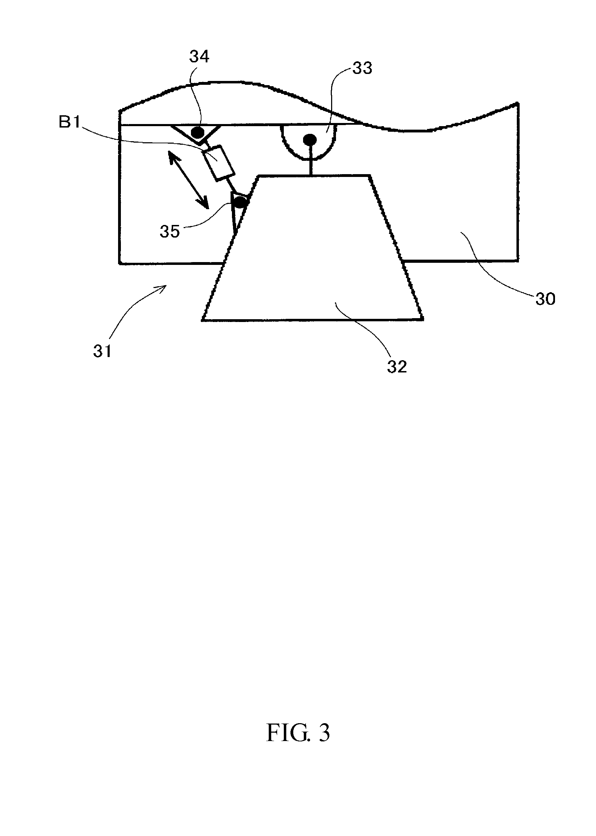

Hereinafter, embodiments of the present invention will be described while referring to the drawings. Fig. 1 is a block diagram illustrating the schematic configuration of an actuator that employs electric actuator drivers according to an embodiment of the present invention, and Fig. 2 is a block diagram illustrating the circuit configuration of the electric actuator drivers. Fig. 3 is a partial explanatory view illustrating a configuration where the actuator with the electric actuator drivers is provided for deflecting a nozzle of a rocket motor installed in a rocket.

As illustrated in Fig. 1, the actuator B1 is configured to be driven by the electric actuator drivers A1 and A2 according to the embodiment of the present invention.

Hereinafter, the electric actuator driver A1 will be described, but the description of the electric actuator driver A2 will be omitted because it has the same configuration with the electric actuator driver A1.

As illustrated in Fig. 2, the electric actuator driver A1 according to the embodiment of the present invention includes: an inverter circuit B to control a first motor 11A by means of an inverter; a motor braking circuit C to apply a regenerative brake on the first motor 11A; a DC power supply 20 to supply electric power to these circuits; and a controller D. The DC power supply 20 is shared by the electric actuator drivers A1 and A2.

The first motor 11A is a three-phase AC servomotor, and is provided with a rotation angle sensor 12 to detect the rotation angle.

Among output lines U, V and W of the first motor 11A, the U and V phases are provided with current sensors S1 and S2, which are each connected to an input port of the controller D.

The actuator B1 is provided with a position sensor 21 to detect the position of an arm 13 of the actuator B1.

The position sensor 21 detects the expansion / contraction position of the arm 13 within the expansion / contraction range of the arm 13.

The position sensor 21 and the rotation angle sensor 12 are each connected to an input port of the controller D described below.

The inverter circuit B includes six power semiconductor switches 22 and corresponding control circuits 23. Each of the control circuits 23 is connected to an output port of the controller D so as to suitably perform switching operation.

The motor braking circuit C includes a braking resistor 24 connected in parallel between the terminals of the first motor 11A and a semiconductor switch 25 connected in series to the braking resistor 24. The semiconductor switch 25 is connected to an output port of the controller D so as to suitably perform switching operation. The braking resistor 24 is however not essential.

A rocket, i.e. flying object, illustrated in Fig. 3, is equipped with two sets of the above-described actuator B1. In order to deflect a nozzle 32 of a rocket motor 31 installed in a frame 30 of the rocket, the actuators are placed on the outer periphery of the nozzle 32 so as to be arranged on the respective virtual lines passing through the center axes of the nozzle and each of the actuators and bisecting at right angle.

Specifically, the frame 30 is provided with the nozzle 32 rotatably attached thereto through a pivot 33, and the actuators B1, B1 (one of them is not illustrated) for controlling the blast angle of the nozzle 32 are disposed between mounts 34 and 35 protruding respectively from the frame 30 and the nozzle 32.

Specifically, the actuators B1 regulate the blast angle of the nozzle 32 to the frame 30 by changing the length of a rod 10 and an arm 13 of the actuator B1 so as to control the flight direction of the frame 30.

The first motor 11A and a second motor 11B are placed coaxially with each other, and are driven and controlled respectively by the electric actuator drivers A1 and A2 according to an embodiment of the present invention.

A ball screw BS includes a housing 14 and a lead 16 that is screwed with a nut 15 of the housing 14.

Along a rotation axis 11a of the first motor 11A, the lead 16 is coaxially coupled thereto. Further, along a rotation axis 11a of the second motor 11B, the housing 14 is coaxially coupled thereto, and the arm 13, which is also placed coaxially to the rotation axis 11a, protrudes.

In this configuration, the electric actuator drivers A1 and A2 independently rotate the respective first motor 11A and the second motor 11B that are coupled to each other through the ball screw BS, so as to move the arm 13 in the direction of the arrow X as well as the housing 14 and the second motor 11B.

That is, by rotating the first motor 11A and the second motor 11B independently from each other, the arm 13 expands / contracts in the direction of the arrow X.

As a result, the ball screw BS travels by the distance corresponding to the sum of the rotation angle of the first motor 11A and the rotation angle of the second motor 11B. Since redundancy is imparted by way of summing up the speeds, if the first motor 11A is immobilized for example, the inertial load of the first motor 11A is not put on that of the second motor 11B. Decrease in power transmission efficiency is thus avoided.

The controller D is a main controller of the electric actuator drivers A1 and A2, and includes a processor, a signal converter, a memory, an amplifier (all not illustrated) and the like. The controller D is also configured to receive a stroke command that is output from the flying object equipped with the actuators of the present invention.

The controller D of the present embodiment has the following functions.

(1) A function of determining whether there is a malfunction in a necessary component. This function is referred to as a "malfunction occurrence determining means D1".

The term "necessary component" includes, for example, the control circuit 23, the power semiconductor switch 22, the first and second motors 11A and 11B and the like.

The term "malfunction" includes failure and the like.

That is, in the present embodiment, determination is made as to whether there is a malfunction in the control circuit 23, the power semiconductor switch 22 and the first and second motors 11A and 11B.
- Regarding the first motor 11A, determination is made as to whether there is a malfunction based on feedback of the position obtained by the position sensor 21 and a command stroke as well as based on the rotation angle detected by the rotation angle sensor 12. Furthermore, occurrence of a malfunction is determined based on feedback of the current obtained by the current sensor S1 and the calculated command current.
- Regarding each of the control circuits 23 and the power semiconductor switches 22, determination is made as to whether there is a malfunction based on feedback of the current detected by the current sensor S1 and the calculated command current.

(2) A function of stopping the inverter circuit B from controlling the first motor 11A if it is determined that there is a malfunction in the necessary component. This function is referred to as a "motor control stopping means D2".

(3) A function of applying a regenerative brake on the first motor 11A by means of the motor braking circuit C. This function is referred to as a "regenerative braking means D3".

If a driver includes the motor control stopping means D2 of the present embodiment, the motor braking circuit C applies a regenerative brake on the first motor 11A after the inverter circuit B stops controlling the first motor 11A.

Specifically, the semiconductor switch 25 is turned on to connect the braking resistor 24 to the DC power supply 20 to cause short circuit. Although not illustrated in the figure, the DC power supply 20 stops supplying power at the same time.

(4) A function of calculating the positional error of the arm 13 of the actuator B1 to the stroke command from the flying object. This function is referred to as a "positional error calculating means D4".

In the present embodiment, the positional error is calculated based on the position of the arm 13 of the actuator B1 indicated by the stroke command from the flying object and feedback of the position obtained by the position sensor 21.

(5) A function of calculating an expansion / contraction speed (command speed) of the arm 13 of the actuator B1 based on the calculated positional error. This function is referred to as an "expansion / contraction speed calculating means D5".

(6) A function of calculating the error in the expansion / contraction speed of the arm 13 of the actuator B1. This function is referred to as an "expansion / contraction speed error calculating means D6".

In the present embodiment, the error in the expansion / contraction speed of the arm 13 is calculated based on feedback of the speed that is output from the rotation angle sensor 12 and the calculated command speed.

(7) A function of calculating a command current to be supplied to the first motor 11A based on the speed error of the arm 13 of the actuator B1. This function is referred to as a "command current calculating means D7".

(8) A function of calculating the current error based on the calculated command current and the current detected by the current sensor S1. This function is referred to as a "current error calculating means D8".

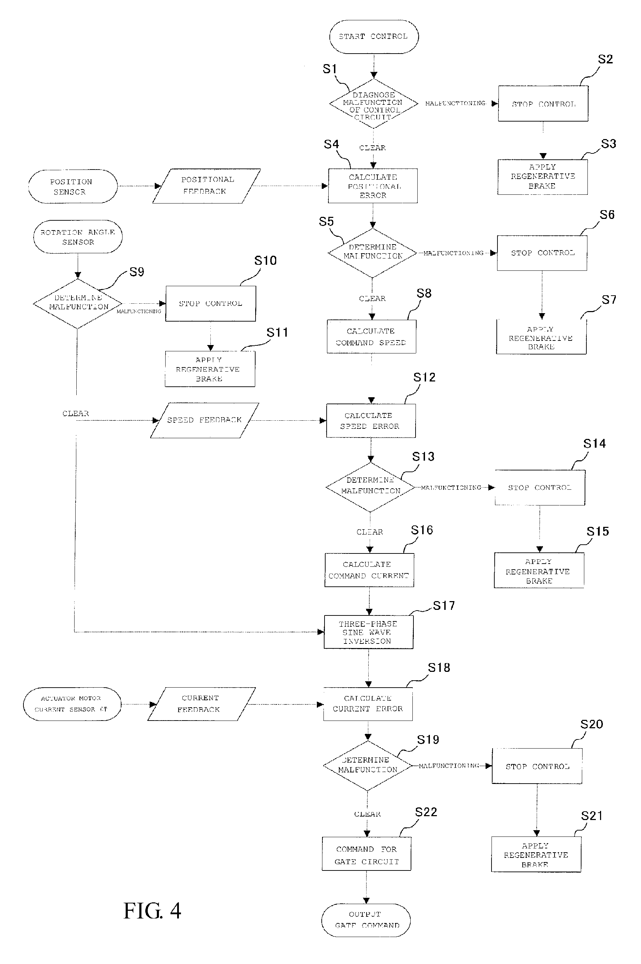

The regenerative braking operation will be described along with the flowchart illustrated in Fig. 4. Fig. 4 is a flowchart illustrating the regenerative braking operation.

Step 1 (abbreviated as S1 in Fig. 2, and so on): Diagnosis of malfunctions is carried out on a control circuit 21, which constitutes the inverter circuit B. If it is diagnosed (determined) that there is a malfunction, the operation proceeds to Step 2. If not, the operation proceeds to Step 4.

Step 2: The control by the control circuit 23 is stopped.

Step 3: The above-described regenerative braking operation is carried out.

Step 4: The positional error of the arm 13 is calculated based on the expansion / contraction position of the arm 13 of the actuator B1 that is output from the position sensor 21 and a stroke command that is output from the flying object.

Step 5: Determination is made as to whether there is a malfunction in the first motor 11A based on the positional error of the arm 13. If it is determined that there is a malfunction, the operation proceeds to Step 6. If not, the operation proceeds to Step 8.

Step 6: The control by the control circuit 23 is stopped.

Step 7: The above-described regenerative braking operation is carried out.

Step 8: The expansion / contraction speed of the arm 13 of the actuator B1 is calculated based on the calculated positional error.

Step 9: Determination is made as to whether there is a malfunction in the first motor 11A based on the rotation angle detected by the rotation angle sensor 12. If it is determined that there is a malfunction in the first motor 11A, the operation proceeds to Step 10. If not, the operation proceeds to Step 17.

Step 10: The control by the control circuit 23 is stopped.

Step 11: The above-described regenerative braking operation is carried out.

Step 12: The error in expansion / contraction speed of the arm 13 is calculated based on the expansion / contraction speed of the arm 13 that is obtained according to the rotation angle that is output from the rotation angle sensor 12 as well as based on the calculated command speed of the arm 13.

Step 13: Determination is made as to whether there is a malfunction based on the calculated speed error. If it is determined that there is a malfunction, the operation proceeds to Step 14. If not, the operation proceeds to Step 16.

Step 14: The control by the control circuit 23 is stopped.

Step 15: The above-described regenerative braking operation is carried out.

Step 16: The command current to be supplied to the first motor 11A is calculated based on the calculated speed error.

Step 17: A three-phase sine wave inversion is made based on the rotation angle that is output from the rotation angle sensor 12 and the calculated command current.

Step 18: The error in current is calculated based on feedback of the motor currents from the current sensors S1 and S2 of the first motor 11A and the three-phase sine wave inverted in Step 17.

Step 19: Determination is made as to whether there is a malfunction based on the calculated current error. If it is determined that there is a malfunction, the operation proceeds to Step 20. If not, the operation proceeds to Step 22.

Step 20: The control by the control circuit 23 is stopped.

Step 21: The above-described braking operation is carried out.

Step 22: A command is output to the gate circuit based on the current error calculated in Step 18.

With the electric actuator drivers A1 and A2 having the above-described configuration, the following advantageous effects can be obtained.
- When there is no malfunction in the necessary component, the inverter circuit B is supplied with DC power from the DC power supply 20 to drive the actuator driving motors 11A and 11B.
- In contrast, when there is a malfunction in the necessary components such as the control circuit 23, the actuator B1 and the first and second motors 11A and 11B, the semiconductor switch 25 is turned on to connect the braking resistor 24 to the DC power supply 20 to cause short circuit.

The generated current at this moment is rectified by a flywheel diode of the inverter circuit B so as to be drawn to the braking resistor 24. As a result, the current flowing through the coils of the first and second motors 11A and 11B produces braking torque, which slows down the rotation of the first and second motors 11A and 11B.
- In this way, when there occurs a malfunction such as failure in the actuator driving motor, it can be brought into a stop in a shorter time without employing a mechanical braking system. That is, because the braking operation is performed by use of the regenerative current in combination with the semiconductor switch, it can be performed in a greatly short time compared to a mechanical braking system.
- Because a mechanical braking system is not required, the driver can be reduced in size and weight.

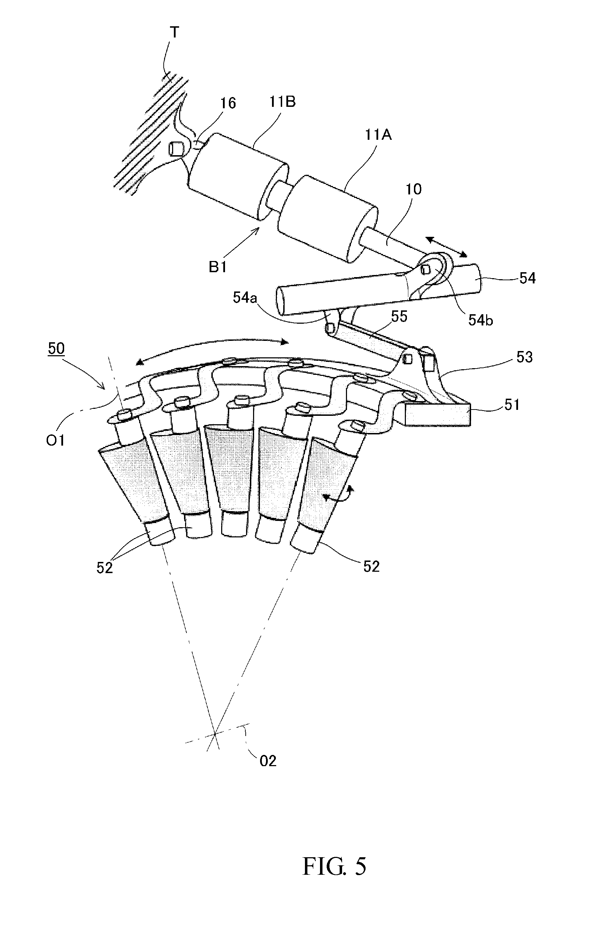

In the above-described embodiment, the actuator with the drivers of the present invention is used for deflecting the rocket nozzle. The actuator may be however used for moving a movable vane of a jet engine as illustrated in Fig. 5 instead. Fig. 5 is a perspective view illustrating a configuration where the actuator with the drivers of the present invention is used for moving the movable vane of the jet engine. The same components as those of the previously-described embodiment are referred to by the same reference signs, and the descriptions thereof are omitted.

The movable vane 50 of the jet engine illustrated in Fig. 5 includes a annular movable ring 51 and a plurality of movable stator vanes 52 rotatably supported about respective axes O1 on the movable ring 51 at regular angles.

A mount 53 protrudes from an outer periphery of the movable ring 51. Further, mounts 54a and 54b protrude from a crank shaft 54 that is placed in parallel to the rotation axis 02 of the movable ring 51. A linker 55 is disposed between the mount 53 and the mount 54a.

The mount 54b of the crank shaft 54 is coupled to the rod 10 of the actuator B1. Further, an arm 13 thereof is coupled to a fixed portion T of the jet engine.

With this configuration, the actuator B1 swings the movable stator vanes 52 within a required range of angles.

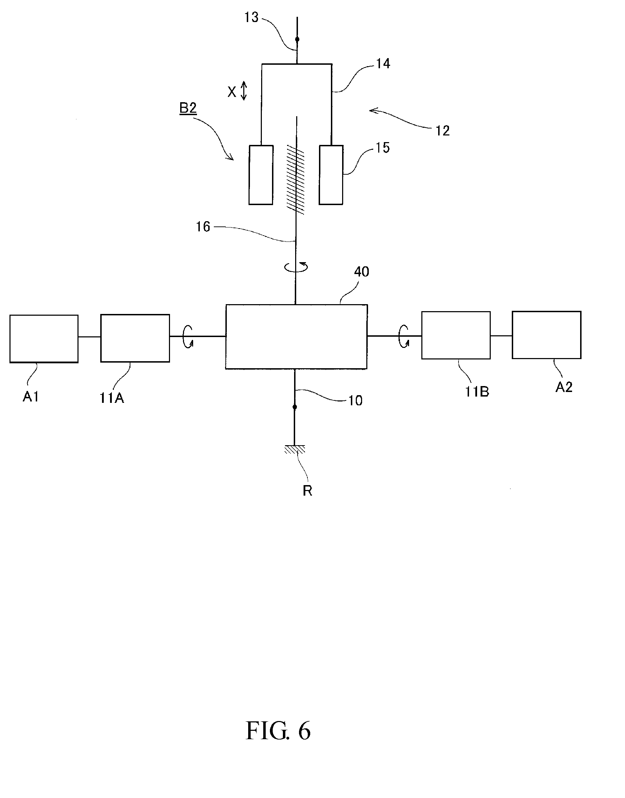

Next, another embodiment will be described with reference to Fig. 6. Fig. 6 is a block diagram illustrating the schematic configuration of this embodiment. The same components as those of the previously-described embodiment are referred to by the same reference signs, and the descriptions thereof are omitted.

The actuator B2 of this embodiment is the same as the actuator B1 in that it is driven by the electric actuators A1 and A2 according to the embodiment of the present invention, but is different from the actuator B1 in some of the components.

A rocket, i.e. flying object, illustrated in Fig. 3, is equipped with two sets of the above-described actuators B2 (read B1 as B2), which are placed on the outer periphery of a nozzle 32 so as to be arranged on the respective virtual lines passing through the center axes of the nozzle and each of the actuators and bisecting at right angle in order to deflect the nozzle 32 of a rocket motor 31 installed in a frame 30 of the rocket.

The frame 30 is provided with a nozzle 32 rotatably attached thereto through a pivot 33, and the actuators B2, B2 (one of them is not illustrated) for controlling the blast angle of the nozzle 32 are disposed between mounts 34 and 35 protruding respectively from the frame 30 and the nozzle 32.

The actuators B2 control the blast angle of the nozzle 32 to the frame 30 by changing the length of respective rods 10 and arms 13 thereof so as to control the flying direction of the frame 30.

First and second motors 11A and 11B are coupled to a lead 16 through a differential gear unit 40, and are driven and controlled respectively by electric actuator drivers A1 and A2.

In this configuration, the electric actuator drivers A1 and A2 independently rotate the respective first motor 11A and the second motor 11B which are coupled through the differential gear unit 40, so as to move an arm 13 as well as a housing 14 and the second motor 11B in the direction of the arrow X.

That is, by rotating the first motor 11A and the second motor 11B independently from each other, the arm 13 expands / contracts in the direction of the arrow X.

With this configuration, the ball screw BS travels by the distance corresponding to the sum of the rotation angle of the first motor 11A and the rotation angle of the second motor 11B. Since redundancy is imparted by way of summing up the speeds, if the first motor 11A is immobilized for example, the inertial load of the first motor 11A is not put on the second motor 11B. Decrease in power transmission efficiency is thus avoided.

The present invention is not limited to the above-described embodiments, but the following changes and modifications may be made.
- In the above-described embodiments, the braking circuit C is provided outside the inverter circuit B. Instead, three semiconductor switches 25 on a lower side (or on a upper side) of the inverter circuit B may be turned on through the control circuits 23 by a command of the controller D, and those three semiconductor switches 25 may be turned off through the control circuits 23 by a command of the controller D. Even in this case, the same functions and advantageous effects can be obtained.

Alternatively, also by providing additional semiconductor switches 25 and control circuits 23 for the braking operation, the same functions and advantageous effects can be obtained.
- The above-described embodiments employ the actuator with a three-phase AC motor. The same functions and advantageous effects can however be obtained even if a single-phase motor or a DC motor is employed instead.

In the case of a single-phase motor, a single-phase inverter circuit is employed as the power converter for driving the motor. In the case of a DC motor, a DC chopper is employed instead of the inverter circuit.

The above-described embodiments are actuators that employ the electric actuator drivers A1 and A2 according to the embodiment of the present invention. It is however needless to say that two or more electric actuator drivers may be employed in combination.

In the above-described embodiment, the electric actuator drivers A1 and A2 are both controlled by the single controller D. They may however be controlled by respective separate controllers instead.

### Reference Signs List

11A, 11B actuator driving motors (first motor, second motor)
12 rotation angle sensor
20 power supply (DC power supply)
21 position sensor
B inverter circuit
B1, B2 actuators
C motor braking circuit
D1 malfunction occurrence determining means
D2 motor control stopping means
D3 regenerative braking means
D4 positional error calculating means
D6 expansion / contraction speed error calculating means
D8 current error calculating means

## Claims

1. An electric actuator driver, comprising: a power supply; an actuator driving motor to be supplied with power from the power supply to drive an actuator; and a motor braking circuit to apply a regenerative brake on the actuator driving motor; wherein
the electric actuator driver further comprises:
a malfunction occurrence determining means to determine whether there is a malfunction in a necessary component; and
a regenerative braking means to apply the regenerative brake on the actuator driving motor by means of the motor braking circuit.

2. The electric actuator driver according to claim 1, further comprising an inverter circuit to control the actuator driving motor by means of an inverter,
wherein the malfunction occurrence determining means determines whether there is a malfunction in the inverter circuit.

3. The electric actuator driver according to claim 2, wherein the necessary component is the actuator driving motor, the inverter circuit or the actuator.

4. The electric actuator driver according to claim 2 or 3, further comprising a motor control stopping means to stop the inverter circuit from controlling the actuator driving motor,
wherein if the malfunction occurrence determining means determines that there is a malfunction, the motor control stopping means stops the inverter circuit from controlling the actuator driving motor and thereafter
the regenerative braking means applies the regenerative brake on the actuator driving motor by using a semiconductor switch.

5. The electric actuator driver according to any one of claims 1 to 4, further comprising: a position sensor to detect a position of a moving part of the actuator; and
a positional error calculating means to calculate a positional error of the moving part based on feedback of the position detected by the position sensor,
wherein the malfunction occurrence determining means determines whether there is a malfunction based on the calculated positional error.

6. The electric actuator driver according to any one of claims 1 to 5, further comprising rotation angle sensors to detect rotation angle of each of a plurality of the actuator driving motors,
wherein the malfunction occurrence determining means determines whether there is a malfunction based on the rotation angle of each of the plurality of actuator driving motors detected by the rotation angle sensors.

7. The electric actuator driver according to any one of claims 1 to 6, further comprising a speed error calculating means to calculate a speed error based on feedback of a speed,
wherein the malfunction occurrence determining means determines whether there is a malfunction based on the calculated speed error.

8. The electric actuator driver according to any one of claims 1 to 7, further comprising a current error calculating means to calculate a current error based on feedback of a current,
wherein the malfunction occurrence determining means determines whether there is a malfunction based on the calculated current error.

9. An actuator, comprising the electric actuator driver according to any one of claims 1 to 8.
